# EUROPÄISCHE PATENTSCHRIFT

(11) **EP 0 811 516 B1**
(45) Veröffentlichungstag und Bekanntmachung des Hinweises auf die Patenterteilung: **06.09.2006**
(21) Anmeldenummer: 97250167.0
(22) Anmeldetag: 30.05.1997
(51) Int. Cl.: B60J 5/04

(54) **Kraftfahrzeugtür**
Vehicle door
Porte de véhicule

(30) Priorität: 04.06.1996 DE 19622310
(43) Veröffentlichungstag der Anmeldung: 10.12.1997
(73) Patentinhaber: Brose Fahrzeugteile GmbH & Co. KG, Coburg, 96450 Coburg (DE)
(72) Erfinder: Waltz, Uwe, 96049 Bamberg (DE); Stenzel, Manfred, 96047 Bamberg (DE)
(74) Vertreter: Müller, Wolfram Hubertus

(56) Entgegenhaltungen:
- EP-A- 0 406 034
- EP-A- 0 495 712
- DE-A- 4 026 217
- DE-C- 3 928 685
- US-A- 5 308 129

## Beschreibung

Die Erfindung betrifft eine Kraftfahrzeugtür gemäß dem Oberbegriff des Patentanspruchs 1 und zeichnet sich durch eine einfache Schloßmontage mittels eines vormontierbaren und vorprüfbaren Funktionsmoduls bei gleichzeitiger Realisierung einer Feuchtigkeitssperre, die Naß- und Trockenraum trennt, aus.

Aus DE 40 26 217 A1 ist eine Fahrzeugtür mit einem Türaußenblech und einem vollkommen geschlossenen Türinnenblech, an das Anbauteile montiert sind, bekannt. Es wird vorgeschlagen, im Türinnenblech Sicken und Eindrückungen vorzusehen, die Anbauteile, wie Türinnenbetätigung, Schloß und Zentralverriegelung, sowie die daran angeschlossenen Leitungen und Gestänge aufnehmen können.

Dadurch sollen Durchgangsöffnungen im Türinnenblech vermieden und eine Versteifung des Türkörpers erreicht werden. Die Türinnenverkleidung deckt die Sicken und Eindrückungen mit den darin enthaltenen Anbauteilen ab.

Der Fensterrahmen wird im Naßraum des Türkörpers von oben her eingesetzt und mit seinen im wesentlichen vertikal verlaufenden Fensterrahmenholmen daran verschraubt. An diesen Holmen befestigt ist auch ein elektrischer Fensterheber, über dessen Verkabelung, insbesondere mit einem Betätigungsschalter, nichts gesagt ist.

Diese Lösung weist den Nachteil auf, daß das außerhalb des Türkörpers angeordnete Schloß sehr stabil ausgeführt sein muß und daß im Bereich seiner Befestigung am Türinnenblech Verstärkungsmaßnahmen vorzusehen sind, um eine hinreichende Ausreißsteifigkeit zu erreichen. Eine kostengünstige Trockenraumausführung des Schlosses kann auch nicht eingesetzt werden, da der Eingriffsbereich des Schlosses, in den das karosserieseitige Schließteil eingreift, im Naßraum liegt.

In US 5,308,129 ist eine Trägerplatte mit einem Fensterheber, einem Betätigungsgriff und einem Schloß, das an einem verschieblich an der Trägerplatte lagernden Kunststoffträger befestigt ist, beschrieben. An einer seitlichen Fläche der Trägerplatte wird das Schloß zunächst mittels einfacher Schnappverbindungen gehalten und anschließend über ein Betätigungsgestänge mit dem Betätigungsgriff verbunden. Dadurch sollen die Vormontage und der Transport vereinfacht werden. Bei der Montage in der Tür sind separate Befestigungsstellen zwischen Trägerplatte und Tür sowie zwischen Schloß und Tür vorgesehen.

Das beschriebene Konstruktionsprinzip sieht vor, die vormontierte Trägerplatte in den von Türaußenblech und Türinnenblech gebildeten Naßraum einzusetzen, um eine hohe Ausreißfestigkeit des Schlosses gewährleisten zu können. Somit müssen sämtliche Anbauteile in der aufwendigen Naßraumausführung verwendet oder separate Schutzmaßnahmen vor Feuchtigkeit getroffen werden.

Aus der EP 406 034 A1 ist eine Kraftfahrzeugtür mit einem Türaußenblech und einem Türinnenblech sowie einer am Türinnenblech zu befestigenden Trägerplatte bekannt, an der ein Türschloß befestigt ist, welches von der Trägerplatte in den Naßraum der Kraftfahrzeugtür ragt.

Der Erfindung liegt die Aufgabe zugrunde, eine einfach zu komplettierende Fahrzeugtür unter Verwendung einer mit Funktionseinheiten vormontierten Trägerplatte zu entwickeln, die eine Trockenraumausführung des Schlosses bei gleichzeitiger hoher Ausreißfestigkeit ermöglicht.

Erfindungsgemäß wird die Aufgabe durch die Merkmale des Anspruchs 1 gewährleistet. Die Unteransprüche geben Vorzugsvarianten der Erfindung an.

Die Erfindung stellt im Vergleich zu bekannten Lösungen der Türmodultechnik erstmals Mittel zu Verfügung, die ermöglichen, das Schloß als Bestandteil einer vormontierbaren und vorprüfbaren Einheit auf einem Träger zu befestigen, der gleichzeitig einen Ausschnitt im Türinnenblech abdichten soll, so daß das Schloß im Trockenraum liegt. Darüber hinaus übertrifft die Ausreißfestigkeit des Schlosses, die für einen eventuellen Crash von Bedeutung ist, selbst die Werte, die für im Naßraum einer konventionellen Tür montierten Schlösser erzielt werden.

Gemäß der Erfindung ist das Schloß auf der dem Türinnenblech zugewandten Seite eines am Rand der Trägerplatte vorgesehenen Schloßträgers vormontiert, wobei sich die Trägerplatte mit dem Schloßträger bis in den Schloßbereich der Tür erstreckt. Der Schloßträger kann auch von einem separaten Teil gebildet sein, das, zum Beispiel durch Schweißen oder Schrauben, mit der Trägerplatte fest verbunden ist. Denkbar sind aber auch solche vorzugsweise ausreißfesten Verbindungen zwischen der Trägerplatte und dem schloßtragenden Teil, die eine begrenzte Beweglichkeit zum Zwecke des Toleranzausgleichs bei der Montage zulassen.

Vorzugsweise greift der Rand der Trägerplatte beziehungsweise das mit ihr verbundene separate Teil über den stirnseitigen Bereich des Schlosses, wobei Befestigungsschrauben zum Verbinden von Trägerplatte und Trägerblech auch im Schloßbereich vorgesehen sind. Dadurch wird eine besonders hohe Ausreißfestigkeit für das Schloß erreicht. Idealerweise durchgreifen wenigstens zwei Befestigungsschrauben den Schloßkörper.

Um eine kostengünstige Trockenraumausführung des Schlosses wählen zu können, ist es notwendig, daß auch der stirnseitige Schloßbereich durch ein Dichtungselement vor Nässe geschützt wird. Dazu muß das Dichtungselement zumindest den unmittelbaren Schloßbereich abdichten, zum Beispiel indem das Dichtungselement im wesentlichen entlang der Kontur des Schlosses beziehungsweise der Kontur des Schloßträgers verläuft. Vorteilhaft ist hierbei eine Führung der Dichtung von der Stirnseite der Tür bis in den Trockenraum hinein, der sich zwischen der Türinnenverkleidung und dem Türinnenblech beziehungsweise der Trägerplatte erstreckt. Soweit das Dichtungselement nicht umlaufend geschlossen ist, werden seine Enden von der karosserieseitigen Türflanschdichtung überdeckt.

Weitere Möglichkeiten zum Schutz des Schlosses vor Nässe bestehen in der Anordnung des Dichtungselements entlang der Stirnseite des schloßtragenden Trägerblechbereichs, wobei sich dieses an der gegenüberliegenden Stirnseite der B-Säule abstützt, oder der Führung des Dichtungselements entlang der Kontur des Außenblechs der Tür, wobei ebenfalls eine ununterbrochene Abdichtung bezüglich der B-Säule vorgesehen ist. Um hinreichend gute Trockenraumbedingungen zwischen den Stirnseiten von Tür und B-Säule zu schaffen, muß auch ein Wasserdurchtritt vom Türboden und vom Fahrzeugdach her verhindert werden. Dies kann durch eine ebenfalls gute Abdichtung der genannten Bereiche erfolgen oder durch eine dichtungsmäßige Abtrennung des zwischen den Stirnflächen von Tür und B-Säule befindlichen Trockenraums von den angrenzenden, nicht hinreichend trockenen Räumen.

Es besteht aber auch die Möglichkeit, das notwendige Dichtungselement direkt auf der Stirnfläche des Schlosses anzuordnen, falls die Trägerplatte das Schloß stirnseitig nicht übergreifen sollte. Dies ist insbesondere dann notwendig, wenn sich ein Bereich des Schlosses über die Stirnfläche der Tür hinaus erhebt. Durch die voranbeschriebenen Maßnahmen entsteht zusätzlich zu den zwischen der Türinnenverkleidung und dem Türinnenblech befindlichen Trockenraum ein weiterer Trockenraum, der zumindest den Teil des sich zwischen Türstirnseite und B-Säule erstreckenden Raums dichtend abschließt, in dem der Eingriffsbereichs des Schlosses und das B-säulenseitige Schließteil liegt. Somit befinden sich sämtliche Abschnitte des Schlosses bei geschlossener Tür in einem der beiden Trockenräume. Es kann also ein Schloß in kostengünstiger Trockenraumausführung verwendet werden.

Darüber hinaus gestattet diese Trockenraumausführung auch die Anordnung von elektrischen Kontakten in diesem Bereich, die zur Energie und Signalübertragung zu elektrischen Funktionseinheiten in der Tür vorgesehen sind. Diese Kontakte können als separate Teile in der Nähe des Schlosses oder als Bestandteile der Schließvorrichtung selbst ausgeführt sein. Ein Spritzwasserschutz schützt die Kontakte auch bei geöffneter Tür vor Nässe. Beim Schließen der Tür gibt der Spritzwasserschutz die Kontakte und gegebenenfalls die dadurch abgedeckten Schließteile wieder frei.
- Figur 1: perspektivische Explosivdarstellung der Hauptbestandteile einer Kraftfahrzeugtür;
- Figur 1a: Ausschnitt einer Trägerplatte mit einstückig angeformtem Schloßträger;
- Figur 2: perspektivische Explosivdarstellung eines Ausschnitts der Kraftfahrzeugtür im Bereich des Schlosses und mit einem Dichtungselement in diesem Bereich am Türinnenblech;
- Figur 3: wie Figur 2, jedoch mit einem Dichtungselement im Schloßbereich auf dem Schloßträger;
- Figur 4: perspektivische Darstellung des Ausschnitts einer Kraftfahrzeugkarosserie mit elektrischen Kontakten im Bereich des Schlosses;
- Figur 4a: vergrößerter Ausschnitt aus Figur 4;
- Figur 5: perspektivische Darstellung des Ausschnitts einer Kraftfahrzeugtür mit elektrischen Kontakten im Bereich des Schlosses;
- Figur 5a: vergrößerter Ausschnitt aus Figur 5.

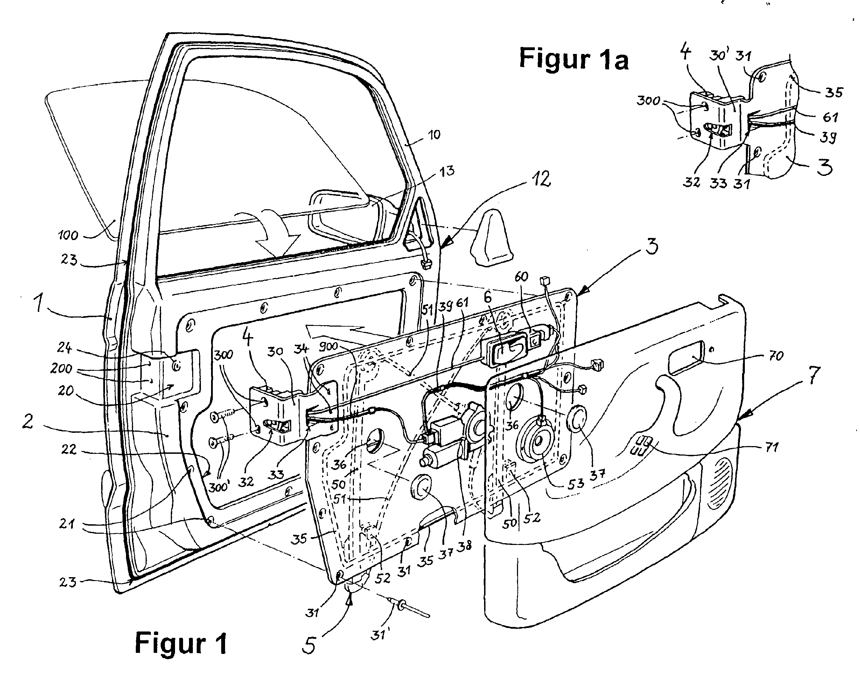

Figur 1 zeigt die Hauptbestandteile einer Kraftfahrzeugtür unmittelbar vor dem Zusammenbau im Automobilwerk. Diese Hauptbestandteile sind die aus Türaußenblech 1 und Türinnenblech 2 bestehende Türkarosserie 12, die mit einer Vielzahl mit Funktionseinheiten 4, 5, 6, 38, 39, 53 bestückte Trägerplatte 3 sowie die Türinnenverkleidung 7. Darüber hinaus sind lediglich noch die Fensterscheibe 100 und der Türaußenspieg 13 zu montieren. Der modulare Aufbau der Fahrzeugtür erlaubt eine umfangreiche Vormontage von Einzelteilen und Baugruppen ebenso wie eine wesentlich verbesserte Vorprüfung der vorhandenen Funktionsgruppen. Im Ergebnis dessen sinken die Fehlerrate und die Montagezeiten.

Das Türinnenblech 2 der dargestellten Türkarosserie 12 weist einen großen Ausschnitt 22 auf, an dessen Rand eine Vielzahl von Befestigungslöchern 21 angeordnet sind. Sie korrespondieren mit Befestigungslöchern 31 am Umfang der Trägerplatte 3, die mittels Blindnieten 31' am Türinnenblech 2 befestigt werden soll. Natürlich können statt dessen auch Schrauben zum Einsatz kommen. Um einen zuverlässigen Feuchtigkeitsschutz des zwischen Trägerplatte 3 und Türinnenverkleidung 7 befindlichen Trockenraums der Tür zu gewährleisten, ist auf der Naßraumseite der Trägerplatte 3 eine umlaufende Dichtung 35 angeordnet, die nach der Montage auf dem Randbereich des Ausschnitts 22 des Türinnenblech 2 aufliegt.

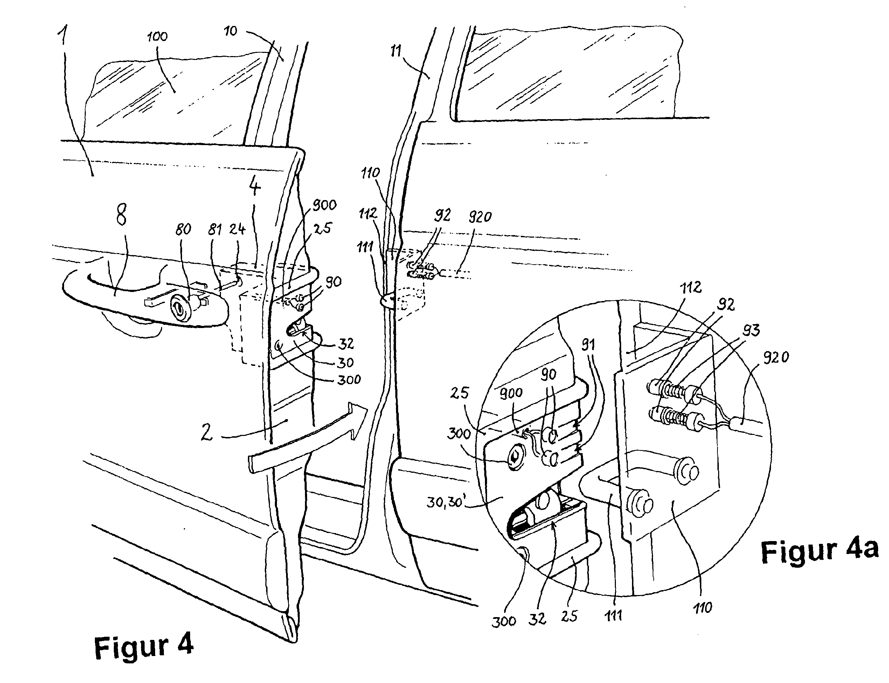

Im Bereich des Schlosses der Türkarosserie 12 ist eine Prägung 20 im Türinnenblech 2 vorgesehen, die in den Hohlraum der Tür gerichtet ist und möglichst formschlüssig das Schloß 4 aufnehmen soll. Öffnungen 24, 200 im Bereich der Prägung 20 sind nur in soweit eingearbeitet, wie sie zur Befestigung bzw. für den Durchgriff eines Koppelelementes 81 zwischen dem Türaußengriff 8 und dem Schloß 4 notwendig sind (siehe hierzu auch Figur 4). In diesem Falle sind diese Öffnungen so zu gestalten, daß sie nach beendeter Türmontage abgedichtet sind und das Schloß 4 vor Feuchtigkeit schützen.

Um die Vorteile der Trennung von Naß- und Trockenraum durch die Trägerplatte 3 voll auszunutzen, wurden möglichst viele und insbesondere die elektrischen Komponenten, wie die Antriebseinheit 38 (bestehend aus Elektromotor mit Getriebe und Elektronikeinheit), der elektrische Schalter 60 für die Spiegelverstellung, der Lautsprecher 53 und der Kabelbaum 39, 900, auf der Trockenraumseite angeordnet. Die Trockenraumausführungen der funktionellen Baugruppen sind wesentlich preiswerter als die aufwendigeren Naßraumausführungen. Auf der Naßraumseite befinden sich nur noch die Führungsschienen 50 des doppelsträngigen Seilfensterhebers sowie die zur Kraftübertragung notwendige Seilschlaufe mit den Bowdenrohren 51. Zur Verbindung der Fensterscheibe 100 mit der Fensterhebermechanik werden die an den Führungsschienen 50 lagernden Mitnehmer 52 bis auf die Höhe der Montageöffnungen 36 in der Trägerplatte 3 verschoben. Nachdem der Montagevorgang abgeschlossen wurde, verschließt man die Öffnungen 36 mit den aus Kunststoff oder Gummi bestehenden Verschlußdeckeln 37.

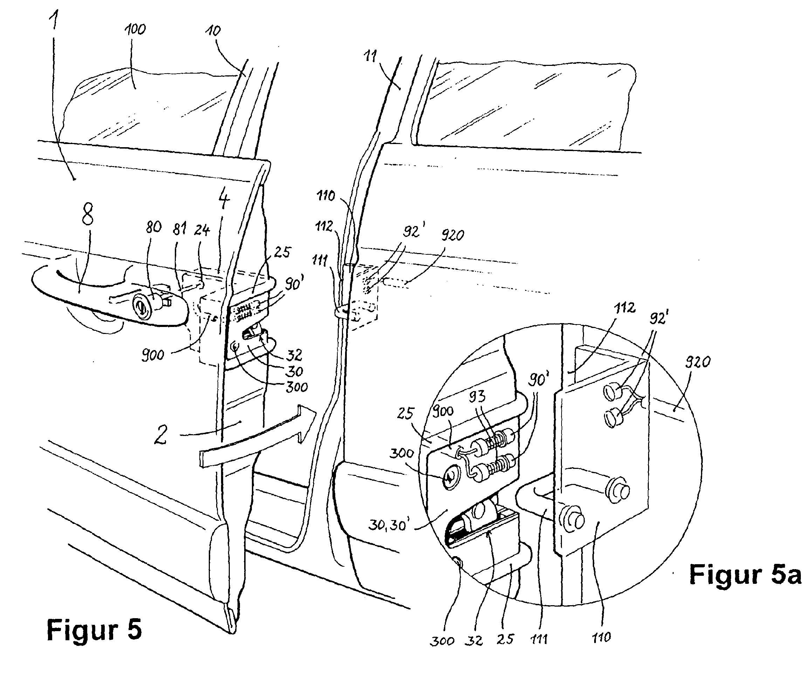

Eine wesentliche funktionelle Baugruppe der Fahrzeugtür stellt das Schließ- und Entriegelungssystem dar. Gemäß der Erfindung ist das Schloß 4 an seinem Schloßträger 30 vormontiert, und zwar so, daß der Schloßträger 30 das Schloß 4 umgreift und somit einen Teil der Stirnseite der Fahrzeugtür bildet. Der Schloßträger 30 stellt ein separates Blechteil dar, das vorzugsweise durch Schweißen fest mit der Trägerplatte 3 verbunden ist. Es besitzt Befestigungslöcher 300, über die das Schloß 4 mittels der Schrauben 300' und der Befestigungsstellen 200 fest mit dem Türinnenblech 2 verbunden werden kann. Der Schlitz 32 erlaubt den Eingriff des an der B-Säule 11 (oder im Falle einer Fondtür: des an der C-Säule) des Fahrzeugs montierten Schließelements 111 in das Schloß 4. Eine weitere Öffnung 33 im Träger 30 dient der Durchführung der Koppelstange 61, die die Betätigungskräfte des Handgriffs 6 der innenliegenden Entriegelungsvorrichtung übertragen soll. Außerdem kann hierdurch auch das Versorgungskabel 900 hindurch geführt werden, wenn das Schloß 4 außerdem der Versorgung der Fahrzeugtür mit elektrischer Energie und Signalen dient, wie dies im Zusammenhang mit den Figuren 4 und 5 nachstehend beschrieben ist.

Es besteht natürlich auch die Möglichkeit, den Schloßträger 30' einstückig an die Trägerplatte 3 anzuformen, wie dies der Ausschnitt von Figur 1a zeigt, und dadurch die Teilezahl zu reduzieren. Im Vergleich zu den zweiteiligen Varianten besteht jedoch der Nachteil eines größeren Materialverschnitts, der aber auch evtl. zur Herstellung weiterer Kleinteile verwendet werden kann.

Um die kostengünstige Trockenraumausführung des Schloßes 4 einsetzen zu können, muß auch der in der Stirnseite der Tür liegende Schloßbereich durch eine Dichtung vor Feuchtigkeit geschützt werden. Gemäß dem Ausführungsbeispiel von Figur 1 geschieht dies durch das Dichtelement 23, das an der Tür in der Nähe der Verbördelung von Türaußenblech 1 und Türinnenblech 2 umlaufend befestigt ist und bei geschlossener Tür an den zugeordneten Bereichen der Fahrzeugkarosserie anliegt. Dadurch wird auch zwischen der Stirnseite der Tür und der B-Säule (beziehungsweise der C-Säule) ein Trockenraum gebildet, so daß das Schloß 4 vollständig von Feuchtigkeit abgeschirmt ist.

Die Erfindung vereint somit mehrere Vorteile: Neben der kostengünstigen Trockenraumausführung des Schloßes 4 wird auch eine wesentlich höhere Ausreißfestigkeit erreicht, die zur Ableitung hoher Crashkräfte notwendig ist. Darüber hinaus erlaubt der erfindungsgemäß geschaffene Trockenraum, der zumindest den unmittelbaren Schloßbereich umfaßt, daß in diesem Bereich elektrische Kontaktelemente zur Übertragung von Signalen und/oder von elektrischer Energie angeordnet werden können.

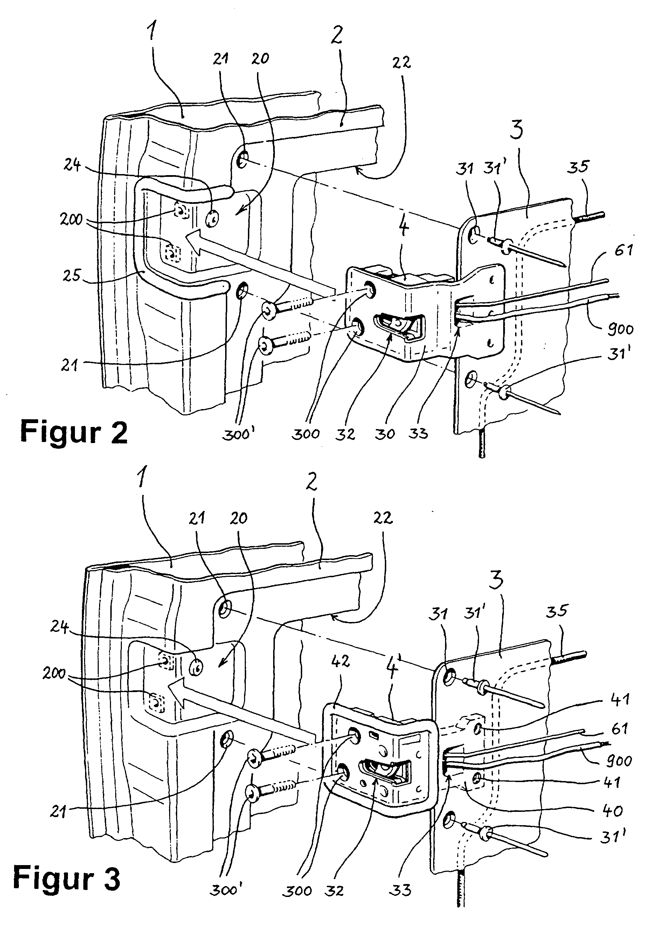

Der in Figur 2 dargestellt Ausschnitt zeigt eine Variante der Erfindung, die sich von der in Figur 1 nur durch den Ersatz des Dichtungselementes 23 durch das Dichtungselement 25 unterscheidet. Dieses Dichtungselement 25 erstreckt sich entlang der äußeren Kontur der Prägung 20, und zwar im Stirnflächenbereich der Tür sowie in dem sich daran anschließenden Bereich auf der Türinnenseite bis zum Erreichen der äußeren Kante der Trägerplatte 3. Nachdem die Trägerplatte 3 mit dem Schloß 4 auf das Türinnenblech 2 aufgesetzt und montiert wurde, wird auch der am Rand des Schloßträgers 30 umlaufende Montagespalt durch das Dichtungselement 25 gedichtet. Bei geschlossener Tür liegt das Dichtungselement 25 zusätzlich an der Stirnfläche der B-Säule 11 und der daran angrenzenden, winkelig verlaufenden Karosseriefläche dichtend an. Damit ist ein sehr eng begrenzter Trockenraum geschaffen, der ausschließlich den Schloßbereich umschließt. Die freien Enden des Dichtungselementes 25 erstrecken sich soweit, daß das Dichtungselement 25 in diesen Bereich von der senkrecht verlaufenden inneren Karosseriedichtung 112 (siehe hierzu auch Figuren 4 und 5) bei geschlossener Tür überdeckt wird.

Bei der in Figur 3 dargestellten Ausführungsform der Erfindung ist ein geschlossenes Dichtungselement 42 auf der äußeren Kante des Schloßträgers aufgebracht. Auch dieses Dichtungselement 42 dichtet bei der Montage der Trägerplatte 3 den Montagespalt im Schloßbereich ab. Der Vorteil dieser Variante besteht darin, daß auch das Dichtungselement 42 durch die Vorfertigung an dem (im Vergleich zur Türkarosserie) kleinen Teil (Schloß 4) zur Verfügung gestellt werden kann. Im übrigen ist seine Wirkungsweise dem Ausführungsbeispiel von Figur 2 analog.

Mit der Schaffung eines Trockenraums, der das Schloß vollkommen umfaßt, besteht erstmals die Möglichkeit der Anordung elektrischer Kontaktstellen in diesem Bereich, ohne aufwendige Schutzmaßnahmen gegen Feuchtigkeit und Schmutz treffen zu müssen. Diese Kontaktstellen können zur Weiterleitung von elektrischer (Antriebs-)Energie und/oder elektrischen Signalen genutzt werden. Die in den Figuren 4 und 5 gezeigten Ausführungsbeispiele stellen die genannten elektrischen Kontaktstellen lediglich schematisch dar. Die vorliegende Erfindung ist nicht auf die konkrete Ausbildung der elektrischen Kontaktstellen gerichtet, sondern auf ihre Anordnung in dem erfindungsgemäßen Trockenraum zwischen der B-Säule (beziehungsweise C-Säule) und der Stirnfläche der Fahrzeugtür. Bei ordnungsgemäß geschlossener Tür sollen die elektrischen Kontakte 90, 90', 92, 92' vorschriftsmäßig verbunden und funktionstüchtig sein. Sollte eine Funktion eines elektrisch betriebenen Aggregates auch bei geöffneter Fahrzeugtür zur Verfügung stehen müssen, so kann die elektrische Energie mittels eines kleinen Akkumulators bereitgestellt werden.

Eine Variante der Integration einer elektrischen Kontaktierungsvorrichtung zeigen die Figuren 4 und 4 a. Die Fahrzeugtür ist mit einem Schloß 4 und einem Dichtungselement 25 ausgestattet, wie bereits in Figur 1 und 2 beschrieben. Unmittelbar an das Schloß 4 sind zwei elektrische Kontaktelemente 90 integriert, die mit einem Leitungsstrang 900 in Verbindung stehen. Diesem zugeordnet sind zwei Kontaktelemente 92, die beim Schließen der Tür auf die Gleitflächen 91 im Träger 30, 30' aufsetzen und sicher auf die Gegenkontakte 90 geführt werden. Federelemente 93 sorgen dafür, daß Abstandstoleranzen überbrückt werden und ein hinreichend großer Kontaktdruck den elektrischen Übergangswiderstand kleinhält. Der Leitungsstrang 920 verbindet die Kontaktelemente 92 mit einer Stromversorgungsquelle und/oder einem elektronischen Steuergerät. Elastizitäten in der Fahrzeugkarosserie stellen bei der elektrischen Kontaktierung kein Problem dar, weil die mechanischen Schließteile 4, 111 bei ihrem Ineinandergreifen die Kontaktelemente 90, 92 zueinander ausrichten.

Die Figuren 5 und 5 a zeigen ein Ausführungsbeispiel, das sich von dem vorangehend beschriebenen (gemäß Figur 4) im wesentlichen durch die Wirkrichtung der federnd gelagerten Kontaktelemente 90' unterscheidet. Hierbei wirken die Federn 93 nicht orthogonal zur Schließbewegungsrichtung des Schlosses 4, sondern in Schließrichtung der Tür. Bei geschlossener Fahrzeugtür stehen die elektrischen Kontaktelemente 90' und 92 miteinander in Wirkverbindung.

An dieser Stelle sei nochmals darauf hingewiesen, daß die Darstellungen der elektrischen Kontakte und Verbindungen nur schematischen Charakter tragen. Je nach Anforderung des Einzelfalls können im beschriebenen Trockenraumbereich des Schloßes 4 eine Vielzahl von energie- und signalübertragenden Kontaktstellen integriert sein. Es ist auch möglich, diese Kontaktstellen mit an sich bekannten Schutzblenden zu versehen, die beim Öffnen der Tür einen Schutz vor direkter Berührung mit anderen Gegenständen oder Spritzwasser bieten.

### Bezugszeichenliste

- 1: Türaußenblech
- 10: Fensterrahmen
- 11: B-Säule
- 12: Türkarosserie
- 13: Türaußenspiegel
- 100: Fensterscheibe
- 110: Verstärkungsblech
- 111: Schließelement
- 112: Dichtungselement

- 2: Türinnenblech
- 20: Prägung / Ausformung
- 21: Befestigungsloch
- 22: Ausschnitt im Türinnenblech
- 23: Umlaufendes Dichtungselement
- 24: Abgedichteter Durchgriff für ein Koppelelement zwischen Türkörper und Außengriff
- 25: Dichtungselement
- 200: Befestigungsstelle

- 3: Trägerplatte
- 30: Träger für Schloß, separates Teil
- 30': Träger für Schloß, in Trägerplatte integriert
- 31: Befestigungsloch
- 31': Blindniet
- 32: Ausnehmung, Schlitz
- 33: Schlitz, Öffnung
- 34: Befestigungspunkt
- 35: Dichtungselement
- 36: Montageöffnung
- 37: Verschlußdeckel
- 38: Antriebseinheit
- 39: Kabelbaum
- 300: Befestigungsloch
- 300': Schraube

- 4: Schloß
- 4': Schloß
- 40: Haltewinkel
- 41: Befestigungsloch
- 42: Dichtungselement

- 5: Doppelsträngiger Seilfensterheber
- 50: Führungsschiene
- 51: Bowdenrohr
- 52: Mitnehmer zur Befestigung der Fensterscheibe
- 53: Lautsprecher

- 6: Türinnenbetätigung, Handgriff
- 60: Elektrischer Schalter, evtl. mit Elektronik
- 61: Koppelstange

- 7: Türinnenverkleidung
- 70: Ausnehmung für Türinnenbetätigung
- 71: Schalterblock für elektrischen Fensterheber

- 8: Türaußengriff
- 80: Schließzylinder
- 81: Verbindungselement, Koppelelement

- 90: Kontaktelement
- 90': Kontaktelement
- 91: Führungsebene
- 92: Kontaktelement
- 92': Kontaktelement
- 93: Feder
- 900: Kabel
- 920: Kabel

## Patentansprüche

1. **Kraftfahrzeugtür**
- mit einem Türaußenblech (1) und einem Türinnenblech (2), das einen großen Ausschnitt (22) aufweist, der von einer Trägerplatte (3) mit mehreren Funktionseinheiten dichtend abschließbar ist,
- mit einem zwischen dem Türaußenblech und dem Türinnenblech beziehungsweise der Trägerplatte gebildeten Naßraum, an den sich zum Fahrzeuginneren hin ein Trockenraum anschließt,
- mit einem Schloß (4), das mit wenigstens einer mechanischen oder elektrischen Betätigungseinheit, z.B. Türgriff, Schließzylinder, elektrische Geber-/Steuereinrichtung, in Verbindung steht,
- mit einer in den Naßraum der Tür gerichteten Ausformung (20) des Türinnenblechs, die das Schloß zumindest teilweise aufnehmen kann,
- und mit einem karosseriefesten Schließelement (111), das mit dem Schloß im Bereich der Stirnfläche der Tür formschlüssig in Eingriff bringbar ist,
**dadurch gekennzeichnet,**
- **daß** das Schloß (4, 4') auf der dem Türinnenblech (2) zugewandten Seite eines am Rand der Trägerplatte (3) vorgesehenen Schloßträgers (30, 30') vormontiert ist und
- **daß** ein Dichtungselement (23, 25, 42), das zumindest den unmittelbaren Schloßbereich auf der Stirnseite der Tür gegen Nässe abdichtet, vorgesehen ist, so daß das Schloß im Trockenraum angeordnet ist.

2. Kraftfahrzeugtür nach Anspruch 2, **dadurch gekennzeichnet, daß** der Schloßträger (30, 30') den stimseitigen Bereich des Schlosses (4, 4') zumindest teilweise, vorzugsweise vollständig überdeckt und eine Aussparung (32) für den Eingriff des karosserieseitigen Schließteils (111) aufweist.

3. Kraftfahrzeugtür nach Anspruch 1 oder 2, **dadurch gekennzeichnet, daß** der Schloßträger (30, 30') der Trägerplatte (3) in unmittelbarer Nähe zum Schloß (4, 4') über mehrere Verbindungselemente, insbesondere Schrauben (300'), mit der Stirnseite des Türinnenblechs verbunden ist.

4. Kraftfahrzeugtür nach wenigstens einem der voranstehenden Ansprüche, **dadurch gekennzeichnet, daß** die Verbindungselemente zwischen dem Schloß und dem Türinnengriff, z.B. Gestänge (61), Bowdenzüge und/oder elektrische Leitungen (39, 900), ausschließlich im Trockenraum verlegt sind.

5. Kraftfahrzeugtür nach wenigstens einem der voranstehenden Ansprüche, **dadurch gekennzeichnet, daß** die elektrischen Kontakte (90, 90') vormontierte Elemente des Schlosses (4) oder des Schloßträgers (30, 30') sind, die einerseits mit elektrischen Funktionseinheiten (4, 6, 38, 53, 60, 71) der Tür verbunden sind und andererseits bei geschlossener Tür mit elektrischen (Gegen-) Kontakten (92, 92') der Fahrzeugkarosserie zur Energie- und Signalübertragung in Verbindung stehen.

6. Kraftfahrzeugtür nach Anspruch 5, **dadurch gekennzeichnet, daß** die elektrischen Kontakte als separate Teile ausgeführt sind.

7. Kraftfahrzeugtür nach Anspruch 5 **dadurch gekennzeichnet, daß** die elektrischen Kontakte Bestandteile der Schließvorrichtung z.B. des Schlosses (4, 4') oder des Schließteils (111), sind.

8. Kraftfahrzeugtür nach wenigstens einem der Ansprüche 1 bis 7, **dadurch gekennzeichnet, daß** das Dichtungselement (42) im wesentlichen entlang der umlaufenden Kontur des Schloß (4') verläuft und sich bei geschlossener Tür an der B-beziehungsweise C-Säule (11) abstützt.

9. Kraftfahrzeugtür nach wenigstens einem der Ansprüche 1 bis 7, **dadurch gekennzeichnet, daß** das Dichtungselement (25) im wesentlichen entlang der Stirnseite des Türinnenblechs (2) auf der äußeren Kontur der Prägung (20) verläuft und sich bei geschlossener Tür an der B- beziehungsweise C-Säule (11) sowie der Türflanschdichtung (112) abstützt.

10. Kraftfahrzeugtür nach wenigstens einem der Ansprüche 1 bis 7, **dadurch gekennzeichnet, daß** das Dichtungselement (23) im wesentlichen entlang der Kontur des Türaußenblechs verläuft.

## Claims

1. Motor vehicle door
- with a door outer panel (1) and a door inner panel (2) which has a large cutout section (22) which can be sealingly closed by a support plate (3) with several functional units,
- with a wet space formed between the door outer panel and door inner panel or support plate respectively and adjoined by a dry space towards the inside of the vehicle,
- with a lock (4) which is connected to at least one mechanical or electrical actuating unit, e.g. door handle, lock cylinder, electrical transmitter/control device,
- with a shaped area (20) in the door inner panel directed towards the wet space of the door to hold at least in part the lock,
- and with a closing element (111) fixed on the body which can be brought into positive locking engagement with the lock in the region of the end face of the door
**characterised in that**
- the lock (4,4') is prefitted on a lock support (30,30') provided on the edge of the support plate (3) on the side of the lock support facing the door inner panel (2) and
- that a sealing element (23, 25, 42) is provided which seals at least the immediate lock area on the end side of the door from damp so that the lock is mounted in the dry space.

2. Motor vehicle door according to claim 2, **characterised in that** the lock support (30, 30') covers the end side area of the lock (4,4') at least in part and preferably completely and has a recess (32) for the engagement of the lock part (111) on the body side.

3. Motor vehicle door according to claim 1 or 2, **characterised in that** the lock support (30, 30') of the support plate (3) is connected to the end side of the door inner panel directly adjoining the lock (4,4') through several connecting elements, more particularly screws (300').

4. Motor vehicle door according to at least one of the preceding claims, **characterised in that** the connecting elements between the lock and the door inner handle, e.g. rod linkage (61), Bowden cables and/or electrical leads (39, 900) are placed solely in the dry space.

5. Motor vehicle door according to at least one of the preceding claims, **characterised in that** the electrical contacts (90, 90') are prefitted elements of the lock (4) or of the lock support (30,30') which on the one hand are connected to electrical functional units (4,6,38,53,60,71) of the door and on the other side when the door is closed are in connection with electrical (counter-) contacts (92,92') of the vehicle body for the transfer of energy and signals.

6. Motor vehicle door according to claim 5, **characterised in that** the electrical contacts are designed as separate parts.

7. Motor vehicle door according to claim 5, **characterised in that** the electrical contacts are constituent parts of the closing device, e.g. the lock (4,4') or of the closing part (111).

8. Motor vehicle door according to at least one of claims 1 to 7, **characterised in that** the sealing element (42) runs substantially along the circumferential contour of the lock (4') and when the door is closed is supported on the B or C-pillar (11).

9. Motor vehicle door according to at least one of claims 1 to 7, **characterised in that** the sealing element (25) runs substantially along the end side of the door inner panel (2) on the outer contour of the indentation (20) and when the door is closed is supported on the B or C pillar (11) as well as on the door flange seal (112).

10. Motor vehicle door according to at least one of claims 1 to 7, **characterised in that** the sealing element (23) runs substantially along the contour of the door outside panel.

## Revendications

1. Porte de véhicule automobile, comportant
- une tôle extérieure de porte (1) et une tôle intérieure de porte (2) qui présente une grande découpe (22) qui est susceptible d'être fermée avec étanchement par une plaque porteuse (3) pourvue de plusieurs unités fonctionnelles,
- un espace humide formé entre la tôle extérieure de porte et la tôle intérieure de porte ou la plaque porteuse, espace auquel se raccorde vers l'intérieur du véhicule un espace sec,
- une serrure (4) qui est en liaison avec au moins une unité d'actionnement mécanique ou électrique, par exemple une poignée de porte, un barillet de fermeture, un dispositif émetteur/commande électrique,
- une empreinte (20) de la tôle intérieure de porte, qui est dirigée vers l'espace humide de la porte et qui est capable de recevoir au moins partiellement la serrure,
- et un élément de fermeture (111) solidaire de la carrosserie, qui est susceptible d'être amené en engagement par coopération de formes avec la serrure dans la zone de la surface frontale de la porte,
**caractérisée**
- **en ce que** la serrure (4, 4') est prémontée sur le côté, tourné vers la tôle intérieure de porte (2), d'un porte-serrure (30, 30') prévu au bord de la plaque porteuse (3), et
- **en ce qu'**il est prévu un élément d'étanchéité (23, 25, 42) qui étanche vis-à-vis de l'humidité au moins la zone immédiate de la serrure sur la face frontale de la porte, de sorte que la serrure est agencée dans l'espace sec.

2. Porte de véhicule automobile selon la revendication 1, **caractérisée en ce que** le porte-serrure (30, 30') recouvre au moins partiellement, de préférence complètement, la zone côté frontal de la serrure (4, 4') et présente une échancrure (32) pour l'engagement de la partie de serrure (111) côté carrosserie.

3. Porte de véhicule automobile selon la revendication 1 ou 2, **caractérisée en ce que** le porte-serrure (30, 30') de la plaque porteuse (3) est relié à la face frontale de la tôle intérieure de porte à proximité immédiate de la serrure (4, 4') par plusieurs éléments de liaison, en particulier des vis (300').

4. Porte de véhicule automobile selon l'une au moins des revendications précédentes, **caractérisée en ce que** les éléments de liaison entre la serrure et la poignée intérieure de porte, par exemple des tringleries (61), des systèmes à câbles Bowden et/ou des lignes électriques (39, 900), sont posés exclusivement dans l'espace sec.

5. Porte de véhicule automobile selon l'une au moins des revendications précédentes, **caractérisée en ce que** les contacts électriques (90, 90') sont des éléments prémontés de la serrure (4) ou du porte-serrure (30, 30'), qui sont reliés d'une part à des unités fonctionnelles électriques (4, 6, 38, 53, 60, 71) de la porte et qui, la porte étant fermée, sont d'autre part en communication avec des contacts électriques (complémentaires) (92, 92') de la carrosserie de véhicule pour la transmission d'énergie et de signaux.

6. Porte de véhicule automobile selon la revendication 5, **caractérisée en ce que** les contacts électriques sont réalisés sous forme d'éléments séparés.

7. Porte de véhicule automobile selon la revendication 5, **caractérisée en ce que** les contacts électriques font partie du dispositif de fermeture, par exemple de la serrure (4, 4') ou de l'élément de fermeture (111).

8. Porte de véhicule automobile selon l'une au moins des revendications 1 à 7, **caractérisée en ce que** l'élément d'étanchéité (42) s'étend sensiblement le long du contour périphérique de la serrure (4') et prend appui contre le montant B ou contre le montant C (11), la porte étant fermée.

9. Porte de véhicule automobile selon l'une au moins des revendications 1 à 7, **caractérisée en ce que** l'élément d'étanchéité (25) s'étend sensiblement le long de la face frontale de la tôle intérieure de porte (2) sur le contour extérieur de l'empreinte (20) et prend appui contre le montant B ou contre le montant C (11) ainsi que contre le joint à bride (112) de la porte, la porte étant fermée.

10. Porte de véhicule automobile selon l'une au moins des revendications 1 à 7, **caractérisée en ce que** l'élément d'étanchéité (23) s'étend sensiblement le long du contour de la tôle extérieure de porte.
